# FASCICULE DE BREVET EUROPEEN

(11) **EP 4 274 745 B1**
(45) Date de publication et mention de la délivrance du brevet: **02.10.2024**
(21) Numéro de dépôt: 22706066.2
(22) Date de dépôt: 03.01.2022
(51) Int. Cl.: B60C 9/00, B60C 9/18, D03D 15/50

(54) **TISSU POUR PNEUMATIQUE COMPRENANT DES ÉLÉMENTS DE RENFORT DE TRAME ÉBOURIFFÉS À FAIBLE TAUX DE REPRISE D'HUMIDITÉ**
REIFENGEWEBE MIT UMMANTELTEN SCHUSSVERSTÄRKUNGSELEMENTEN MIT NIEDRIGEM FEUCHTIGKEITSABSORPTIONSGEHALT
TYRE FABRIC COMPRISING TOUSLED WEFT REINFORCING ELEMENTS WITH LOW MOISTURE ABSORPTION CONTENT

(30) Priorité: 07.01.2021 FR 2100103
(43) Date de publication de la demande: 15.11.2023
(73) Titulaire: COMPAGNIE GENERALE DES ETABLISSEMENTS MICHELIN, 63000 Clermont-Ferrand (FR)
(72) Inventeur: CHARLEUX, Damien, 63040 Clermont-Ferrand Cedex 9 (FR); DELBAST, Arnaud, 63040 Clermont-Ferrand Cedex 9 (FR); GALLARD, Laure, 63040 Clermont-Ferrand Cedex 9 (FR); GOARANT, Christophe, 63040 Clermont-Ferrand Cedex 9 (FR)
(74) Mandataire: M.F.P. Michelin
(86) Numéro de dépôt international: PCT/FR2022/050001
(87) Numéro de publication internationale: WO 2022/148920

(56) Documents cités:
- WO-A1-2012/063180
- WO-A1-2018/203852
- US-A1- 2013 034 718
- US-A1- 2017 072 747

## Description

La présente invention concerne un tissu pour pneumatique comprenant des éléments de renfort de chaine et des éléments de renfort de trame. L'invention concerne également un composite d'élastomère comprenant ce tissu et un pneumatique comprenant une nappe de frettage obtenue à partir de ce composite. L'invention concerne également un procédé de tissage de ce tissu.

On connait de l'état de la technique un tissu pour pneumatique destiné à équiper des véhicules tourisme commercialisés sous la marque MICHELIN et appartenant à la gamme PRIMACY 4 et présentant des caractéristiques dimensionnelles suivantes : 225/45R17 94WXL TL. Un tel pneumatique comprend une bande de roulement et une armature de frettage s'étendant dans le sommet selon une direction circonférentielle du pneumatique. L'armature de frettage comprend une nappe de frettage comprenant plusieurs éléments de renfort agencés côte à côte sensiblement parallèlement les uns aux autres et formant un angle inférieur ou égal à 10° avec la direction circonférentielle du pneumatique.

Un tel pneumatique de l'état de la technique comprend une nappe de frettage comprenant un tissu tramé comprenant des éléments de renfort de chaine comprenant un assemblage constitué de deux brins multifilamentaires en nylon, les deux brins étant enroulés en hélice l'un autour de l'autre à une torsion de 250 tours par mètre. Chaque brin multifilamentaire présente un titre égal à 140 tex et des éléments de renfort de trame comprenant une fibre naturelle de coton présentant une torsion de 750 tours par mètre et ayant un titre égal à 30 tex. Le tissu tramé est obtenu par entrelacement des éléments de renfort de chaine et de trame via un procédé de tissage par métier à jet d'air. Chaque élément de trame en coton étant un assemblage de fibres naturelles, le tissage à l'aide d'un métier à tisser à jet d'air est relativement facile du fait de la pilosité du matériau qui permet un tissage sur toute la largeur du tissu.

Un tel pneumatique est soumis à de nombreuses agressions. En effet, le roulage de ce type de pneumatique peut se faire sur un revêtement accidenté conduisant parfois à des perforations de la bande de roulement. Ces perforations permettent l'entrée d'agents corrosifs, par exemple l'air et l'eau, qui oxydent les éléments de renfort métalliques de l'armature de sommet, notamment des nappes de sommet, et réduisent considérablement la durée de vie du pneumatique.

Une solution pour augmenter la durée de vie du pneumatique est de lutter contre la propagation de ces agents corrosifs. On peut ainsi prévoir des solutions pour augmenter la durée de vie du pneumatique. Une solution consiste à diminuer le nombre d'éléments de renfort textile de la nappe sommet de frettage, afin de diminuer le stockage et la propagation de l'eau. Une autre solution serait d'augmenter l'épaisseur des nappes et notamment de la nappe de frettage pour éviter le contact entre la nappe de frettage et les nappes sommets de travail et ainsi éviter la propagation des agents corrosifs.

En diminuant le nombre d'éléments de renfort textile, on diminue la propagation d'eau dans les renforts textiles mais on diminue la raideur du tissu. Cette diminution de la raideur du tissu conduit à une baisse de la performance du pneumatique par exemple à haute vitesse, ce qui n'est évidemment pas souhaitable.

En augmentant l'épaisseur de la nappe de frettage, on augmente la masse du pneumatique et donc la résistance au roulement du pneumatique ce qui n'est pas souhaitable.

On connait également de l'état de la technique des tissus tramés comprenant des éléments de renfort de chaine en nylon tels que décrits dans WO2012063180 et US2017072747.

L'invention a pour but de trouver un tissu pour nappe sommet de frettage d'un pneumatique performant industriellement et moins sensible à l'humidité pour minimiser les risques de corrosion et ne présentant pas les inconvénients mentionnés ci-dessus.

A cet effet, l'invention a pour objet un tissu tramé pour pneumatique comprenant plusieurs éléments de renfort de chaine textiles et plusieurs éléments de renfort de trame, dans lequel :
- le taux de reprise d'humidité TxH des éléments de renfort de trame est inférieur ou égal à 2,0 %, le taux de reprise d'humidité étant déterminé selon la norme ASTM D 885/D 885MA de janvier 2010;
- les éléments de renfort de trame entrelacent les éléments de renfort de chaine et ;
- les éléments de renfort de trame sont ébouriffés.

Un élément de renfort de trame comprend plusieurs éléments filaires. Chaque élément filaire est une fibre courte et/ou un filament.

Par élément de renfort de trame ébouriffé, ou encore « hairy weft reinforcing element » en anglais, on entend un élément de renfort comprenant des éléments filaires sortant du cercle circonscrit à un élément de renfort filaire théorique correspondant à l'élément de renfort de trame duquel on a enlevé les éléments filaires sortant.

Par élément de renfort de trame ébouriffé, on entend que l'élément de renfort de trame n'est ni lisse ni texturé tel que décrit dans la demande WO2015016791.

Par définition, le diamètre de l'élément de renfort ébouriffé est le diamètre du cercle circonscrit à l'élément de renfort filaire théorique décrit ci-dessus.

Par élément de renfort de trame, on entend un élément de renfort placé dans le sens de la largeur du tissu. L'élément de renfort de chaine est lui disposé dans le sens de la longueur du tissu. L'élément de renfort de chaîne sert de support à la trame. C'est l'entrelacement à angle de ces deux éléments de renfort qui donne le tissu tramé.

Par tissu, on entend une étoffe composée de deux ensembles d'éléments de renfort de chaîne et de trame lequel est formé au cours d'une étape de tissage par l'entrelacement de ces éléments de renfort.

Le taux de reprise d'humidité des éléments de renfort de trame TxH selon la norme ASTM D 885/D 885MA de janvier 2010 (paragraphe 10) est le rapport de la masse d'eau contenue dans l'élément de renfort de trame sur la masse sèche de l'élément de renfort de trame, exprimé en pourcentage :
TxH = [( W - M)/M] × 100 où W est la masse initiale de l'élément de renfort de trame en grammes et M est la masse de l'élément de renfort de trame soumis après séchage au four en grammes.

Par masse initiale de l'élément de renfort de trame, on entend la masse de l'élément de renfort de trame mesurée après 48 heures à 23°C +/- 2°C sous 50% +/-10% d'humidité relative selon la norme ISO 23529 de 2016.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. De la même manière, les composés mentionnés peuvent également provenir du recyclage de matériaux déjà utilisés, c'est-à-dire qu'ils peuvent être, partiellement ou totalement, issus d'un procédé de recyclage, ou encore obtenus à partir de matières premières elles-mêmes issues d'un procédé de recyclage. Sont concernés notamment les filaments, fibres, polymères, les plastifiants, les charges, etc.

Les inventeurs à l'origine de l'invention démontrent qu'en sélectionnant un élément de renfort de trame ayant un faible taux de reprise d'humidité, on diminue la propagation d'eau dans les renforts textiles et ainsi la propagation d'agents corrosifs qui oxydent les éléments de renfort métalliques de l'armature de sommet, notamment des nappes de sommet et l'élément de renfort de trame ébouriffé présente l'avantage d'être suffisamment pileux pour pouvoir être tissé sur un métier à jet d'air et assurer le maintien des éléments de renfort de chaine. Plus l'élément de renfort de trame a un faible taux de reprise d'humidité, plus on réduit le stockage et la propagation d'eau à l'intérieur du tissu et plus la résistance à la corrosion dans le pneumatique est améliorée.

La mesure de l'ébouriffage ou encore de la pilosité, « hairiness » en anglais est effectuée à l'aide d'un appareil de mesure permettant de mesurer les géométries sur les images scannées et calibrées à partir d'une optique et de systèmes de lumières permettant de révéler la structure des éléments filaires. Dans une première méthode de mesure de l'ébouriffage pour le comptage des éléments filaires, on compte tout élément filaire croisant une ligne perpendiculaire à la tangente au diamètre externe de l'élément de renfort dans le sens de la longueur de l'élément de renfort de trame. Ainsi, pour 100 mètres d'éléments de renfort de trame, on peut ainsi déterminer l'ébouriffage de l'élément de renfort de trame.

Par éléments filaires, on entend des filaments c'est-à-dire des fibres continues ou des fibres courtes, c'est-à-dire des fibres discontinues.

De préférence, dans cette première méthode, les éléments de renfort de trame sont tels que le nombre d'éléments filaires sortant du diamètre de l'élément de renfort de trame est supérieur ou égal à 1 250 éléments filaires par 100 mètres d'éléments de renfort de trame, de préférence supérieur ou égal à 5 000 éléments filaires par 100 mètres d'éléments de renfort de trame et plus préférentiellement supérieur ou égal à 7 500 éléments filaires par 100 mètres d'éléments de renfort de trame.

Une deuxième méthode alternative de mesure de l'ébouriffage peut également être réalisée à l'aide d'un capteur de type USTER TESTER 6 qui mesure le nombre d'éléments filaires sortant du diamètre de l'élément de renfort de trame qui ont une taille comprise entre 1 et 2 mm si on trace une ligne perpendiculaire à la tangente au diamètre externe de l'élément de renfort dans le sens de la longueur de l'élément de renfort de trame. Ainsi, pour 100 mètres d'éléments de renfort de trame, on peut ainsi déterminer l'ébouriffage de l'élément de renfort de trame.

De préférence, dans cette deuxième méthode, les éléments de renfort de trame sont tels que le nombre d'éléments filaires de 1 à 2 mm sortant du diamètre de l'élément de renfort de trame est supérieur ou égal à 5000 éléments filaires par 100 mètres d'éléments de renfort de trame, de préférence supérieur ou égal à 6 000 éléments filaires par 100 mètres d'éléments de renfort de trame et plus préférentiellement supérieur ou égal à 7 000 éléments filaires par 100 mètres d'éléments de renfort de trame.

Avantageusement, les éléments de renfort de chaine sont sensiblement parallèles les uns avec les autres et s'étendent selon une direction générale de chaine (Dc) et les éléments de renfort de trame sont sensiblement parallèles les uns aux autres et s'étendent selon une direction générale dite de trame (Dt) différente de la direction générale de chaine (Dc) avec de préférence la direction générale de trame (Dt) et la direction générale de chaine (Dc) forment un angle supérieur ou égal à 45°, et plus préférentiellement l'angle va de 80° à 110°.

Dans un mode de réalisation, chaque élément de renfort de chaine textile comprend un seul brin multifilamentaire.

Dans un autre mode de réalisation, chaque élément de renfort de chaine textile comprend plusieurs brins multifilamentaires.

De préférence, dans cet autre mode de réalisation, chaque élément de renfort de chaine comprend un assemblage constitué de deux brins multifilamentaires, les deux brins étant enroulés en hélice l'un autour de l'autre et de préférence, l'élément de renfort est équilibré en torsions.

Par « assemblage constitué », on entend que l'assemblage ne comprend pas d'autre brin multifilamentaire que les deux brins multifilamentaires de polyamide aromatique ou copolyamide aromatique et de polyester.

Par équilibré en torsions, on comprend que les deux brins multifilamentaires sont enroulés avec une torsion sensiblement identique et que la torsion des filaments de chaque brin multifilamentaire, c'est-à-dire la torsion des filaments du brin multifilamentaire de polyamide ou copolyamide aromatique et la torsion des filaments du brin de polyester est sensiblement nulle. En effet, le procédé de fabrication de ces éléments de renforts, bien connu de l'état de la technique, comprend une première étape durant laquelle, chaque filé de filaments (en anglais « yarn ») est tout d'abord individuellement tordu sur lui-même (selon une torsion initiale R1' et R2' avec R1'=R2') dans une direction donnée D'=D1'=D2' (respectivement sens S ou Z, selon une nomenclature reconnue désignant l'orientation des spires selon la barre transversale d'un S ou d'un Z), pour former un brin ou surtors (en anglais « strand ») dans lequel les filaments se voient imposer une déformation en hélice autour de l'axe du brin. Puis, au cours d'une seconde étape, les deux brins, sont ensuite retordus ensemble selon une torsion finale R3 telle que R3=R1'=R2' en direction D3 opposée à la direction D'=D1'=D2' (respectivement sens Z ou S), pour l'obtention de l'élément de renfort (en anglais « cord »). Cet élément de renfort est alors dit équilibré en torsion car les filaments des deux brins présentent, dans l'élément de renfort final, la même torsion résiduelle car R1'=R2'. Cette torsion résiduelle est nulle ou sensiblement nulle car R3=R1'=R2' et la direction D'=D1'=D2' est opposée à la direction D3. Par torsion résiduelle sensiblement nulle, on entend que la torsion résiduelle est strictement inférieure à 2,5% de la torsion R3.

Les caractéristiques qui suivent s'appliquent aux deux modes de réalisation décrit ci-dessus.

Avantageusement, le ou les brins multifilamentaires sont choisis parmi les brins de polyesters, les brins de polyamides aliphatiques, les brins comprenant des polyamides aromatiques ou copolyamides aromatiques et les brins comprenant des mélanges de filaments de ces matériaux, de préférence choisis parmi les brins de polyamides aliphatiques et plus préférentiellement réalisés en nylon 6.6.

Par brin de polyester, on rappelle qu'il s'agit d'un ensemble de filaments constitués de macromolécules linéaires formées de groupes liés entre eux par des liaisons esters. Les polyesters sont fabriqués par polycondensation, par estérification entre un diacide carboxylique ou de l'un de ses dérivés, un diol. Par exemple le polyéthylène téréphtalate peut être fabriqué par polycondensation de l'acide téréphtalique et de l'éthylène glycol. Parmi les polyesters connus, on pourra citer le polyéthylène téréphtalate (PET), le polyéthylène naphthalate (PEN), le polybutylène téréphthalate (PBT), le polybutylène naphthalate (PBN), le polypropylène téréphthalate (PPT) ou le polypropylène naphthalate (PPN).

Par brin de polyamide aromatique ou copolyamide aromatique, on rappelle de manière bien connue qu'il s'agit d'un ensemble de filaments constitués de macromolécules linéaires formées de groupes aromatiques liés entre eux par des liaisons amides dont au moins 85% sont directement liées à deux noyaux aromatiques, et plus particulièrement de fibres en poly (p-phénylène téréphtalamide) (ou PPTA), fabriquées depuis fort longtemps à partir de compositions de filage optiquement anisotropes. Parmi les polyamides aromatiques ou copolyamides aromatiques, on pourra citer les polyarylamides (ou PAA, notamment connu sous la dénomination commerciale Ixef de la société Solvay), le poly(métaxylylène adipamide), les polyphtalamides (ou PPA, notamment connu sous la dénomination commerciale Amodel de la société Solvay), les polyamides semi-aromatiques amorphes (ou PA 6-3T, notamment connu sous la dénomination commerciale Trogamid de la société Evonik), les méta-aramides (ou poly(métaphénylène isophtalamide ou PA MPD-I notamment connu sous la dénomination commerciale Nomex de la société Du Pont de Nemours) ou les para-aramides (ou poly(paraphénylène téréphtalamide ou PA PPD-T notamment connu sous la dénomination commerciale Kevlar de la société Du Pont de Nemours ou Twaron de la société Teijin).

Par brin de polyamide aliphatique, on entend un ensemble de filaments constitués de macromolécules linéaires de polymères ou copolymères contenant des fonctions amides ne présentant pas de cycles aromatiques et pouvant être synthétisés par polycondensation entre un acide carboxylique et une amine. Parmi les polyamides aliphatiques, on pourra citer les nylons PA4.6, PA6, PA6.6 ou encore PA6.10, et notamment le Zytel de la société DuPont, le Technyl de la société Solvay ou le Rilsamid de la société Arkema.

Avantageusement, le titre du brin de polyamide aliphatique va de 70 à 120 tex, de préférence de 90 à 110 tex, plus préférentiellement de 90 à 100 tex.

Le titre (ou masse linéique) de chaque brin est déterminé selon la norme ASTM D1423. Le titre est donné en tex (masse en grammes de 1000 m de produit - rappel: 0, 111 tex égal à 1 denier). La densité d'éléments de renfort dans le composite est le nombre d'éléments de renfort pris sur un décimètre du composite selon la direction perpendiculaire à la direction selon laquelle les éléments de renfort s'étendent parallèlement les uns par rapport aux autres.

Avantageusement, la torsion de l'élément de chaque renfort de chaine va de 100 à 500 tours par mètre, de préférence de 250 à 390 tours par mètre et encore plus préférentiellement de 250 à 380 tours par mètre.

La mesure de la torsion de l'élément de renfort peut être réalisée par toute méthode connue par l'homme du métier, par exemple conformément aux normes ASTM D1423 ou ASTM D 885/D 885MA de janvier 2010 (paragraphe 30), par exemple à l'aide d'un torsiomètre.

Avantageusement, chaque élément de renfort de trame comprend, pour au moins 50% de sa masse, un ou plusieurs filaments textiles et/ou plusieurs fibres textiles et de préférence est constitué d'un ou de plusieurs filaments textiles et/ou de plusieurs fibres textiles.

Les filaments et fibres textiles sont habituellement classifiés en deux catégories principales, les filaments et fibres naturels et les filaments et fibres chimiques. Les filaments et fibres naturels comprennent les filaments et fibres d'origine végétale (comprenant notamment le coton), d'origine animale et d'origine minérale. Les filaments et fibres chimiques comprennent les filaments et fibres artificiels et les filaments et fibres synthétiques. Les filaments et fibres artificiels sont fabriqués à partir de matières premières naturelles et comprennent notamment la viscose fabriquée à partir de cellulose de bois. Les filaments et fibres synthétiques comprennent les filaments et fibres polymériques organiques (par exemple les polyesters et les polyamides) des ainsi que les filaments et fibres polymériques inorganiques (par exemple le verre et le carbone).

De préférence, chaque élément de renfort de trame comprend au moins un brin comprenant une âme et une couche revêtant l'âme, l'âme comprenant au moins un filament et la couche comprenant plusieurs fibres courtes sortantes.

Par brin, on entend un assemblage de plusieurs éléments filaires maintenus ensemble à une certaine torsion.

Un filament est un élément unitaire de très grande longueur et continu généralement obtenu par filage d'une matière fondue. Il peut être soit artificiel soit synthétique.

Par fibre courte, on entend une fibre discontinue de longueur réduite. Il peut s'agir soit de fibres naturelles, soit de filaments coupés.

Avantageusement, chaque élément de renfort de trame comprend un assemblage de plusieurs brins comprenant chacun une âme et une couche revêtant l'âme, l'âme comprenant au moins un filament et la couche comprenant plusieurs fibres courtes sortantes et rentrantes.

Plus préférentiellement, chaque élément de renfort de trame comprend un assemblage de deux brins comprenant chacun une âme et une couche revêtant l'âme, l'âme comprenant au moins un filament et la couche comprenant plusieurs fibres courtes sortantes et rentrantes.

Encore plus préférentiellement, chaque élément de renfort de trame est constitué d'un assemblage de deux brins comprenant une âme et une couche revêtant l'âme, l'âme comprenant au moins un filament et la couche comprenant plusieurs fibres courtes sortantes et rentrantes.

Par « assemblage constitué », on entend que l'assemblage ne comprend pas d'autre brin que les deux brins mentionnés ci-dessus.

De préférence, l'âme comprend plusieurs filaments synthétiques polymériques organiques et la couche comprend plusieurs fibres synthétiques polymériques organiques.

De préférence, chaque filament et/ou chaque fibre sont choisis parmi les filaments et les fibres de polyester, les filaments et les fibres de polyamide, les filaments et les fibres de polycétone, les filaments et les fibres de polyuréthane, les filaments et les fibres d'acrylique, les filaments et les fibres de polyoléfine, les filaments et les fibres de polyétheréthercétone et les assemblages de ces filaments et de ces fibres, de préférence parmi les filaments et les fibres de polyester, les filaments et les fibres de polyamide et les assemblages de ces filaments et de ces fibres et plus préférentiellement les filaments et les fibres synthétiques organiques sont des filaments et des fibres de polyester.

Avantageusement, la somme des titres des brins d'éléments de renfort de trame est inférieure strictement à 40 tex, de préférence inférieure ou égale à 30 tex.

Avantageusement, la somme des titres des brins d'éléments de renfort de trame est supérieure ou égale à 2 tex et de préférence supérieure ou égale à 4 tex.

Avantageusement, le titre de chaque brin d'élément de renfort de trame va de 1 à 20 tex et de préférence de 10 à 15 tex.

Avantageusement, la torsion de chaque élément de renfort de trame va de 250 à 1500 tours par mètre, de préférence de 500 à 1300 tours par mètre, plus préférentiellement de 900 à 1200 tours par mètre.

Le titre et la torsion sont déterminées par les normes telles que décrites précédem ment.

Avantageusement, le diamètre de chaque élément de renfort de trame est inférieur strictement à 0,50 mm et de préférence inférieur ou égal à 0,23 mm. Le diamètre de chaque élément de renfort de trame est plus petit que celui de chaque élément de renfort de la trame de l'état de la technique pour réduire le volume libre disponible pour l'eau, et donc réduire le stockage et la propagation de l'eau dans le tissu tramé.

Avantageusement, la densité des éléments de renfort de trame va de 3,0 à 8,0 éléments de renforts de trame par dm de tissu, de préférence de 3,0 à 6,0 éléments de renforts de trame par dm de tissu et plus préférentiellement de 3,0 à 5,5 éléments de renforts de trame par dm de tissu. La longueur de tissu est mesurée selon la direction générale de chaine (Dc). De la même façon que pour le diamètre, la densité des éléments de renfort de la trame est plus petite que celle des éléments de renfort de la trame de l'état de la technique pour réduire le volume libre disponible pour l'eau, et donc réduire la propagation de l'eau dans le tissu tramé.

Un autre objet de l'invention est un composite pour pneumatique comprenant au moins un tissu tel que défini précédemment noyé dans une composition d'élastomère.

Par composition d'élastomère, on entend une composition comprenant un élastomère, de préférence diénique, par exemple du caoutchouc naturel, une charge renforçante, par exemple du noir de carbone et/ou de la silice et un système de réticulation, par exemple un système de vulcanisation, de préférence comprenant du soufre.

De préférence, la composition d'élastomère comprend un élastomère diénique.

Un autre objet de l'invention est un pneumatique comprenant une armature de frettage comprenant au moins une nappe de frettage comprenant un composite d'élastomère tel que défini précédemment.

De préférence, le pneumatique comprenant une armature de frettage comprenant au moins une nappe de frettage obtenue à partir d'un composite d'élastomère tel que défini précédemment.

Les pneumatiques de l'invention, en particulier, peuvent être destinés à des véhicules à moteur du type tourisme, 4x4, "SUV" (Sport Utility Vehicles), mais également à des véhicules deux-roues tels que motos, ou à des véhicules industriels tels que métro, bus, engins de transport routier (camionnettes, camions, tracteurs, remorques), véhicules hors-la-route, engins agricoles ou de Génie civil.

De préférence, les pneumatiques peuvent être destinés à des véhicules à moteur du type tourisme, 4x4, "SUV" (Sport Utility Vehicles).

Un autre objet de l'invention est un procédé de fabrication d'un tissu tramé dans lequel :
- dans une étape de déroulage, on déroule plusieurs éléments de renfort de chaine à partir d'un cantre sur un métier à jet d'air;
- dans une étape de séparation, on sépare les éléments de renfort de chaine en une première et une deuxième nappe d'éléments de renfort de chaine;
- dans une étape d'entrelacement, on entrelace alternativement au moins un élément de renfort de trame avec des éléments de renfort de chaine de la première nappe d'éléments de renfort de chaine puis de la deuxième nappe d'éléments de renfort de chaine;
- dans une étape d'enroulage, on enroule le tissu tramé sur une bobine de stockage ; dans lequel le taux de reprise d'humidité TxH des éléments de renfort de trame est inférieur ou égal à 2,0 % le taux de reprise d'humidité étant déterminé selon la norme ASTM D 885/D 885MA de janvier 2010 et ;
dans lequel les éléments de renfort de trame ébouriffés.

De préférence, dans une étape d'encollage postérieure à l'étape d'entrelacement, on imprègne le tissu tramé d'une composition adhésive.

On citera les compositions adhésives de type RFL (Résorcinol - Formaldéhyde - Latex) mais également les compositions adhésives telles que décrites dans WO2015118041.

L'invention sera mieux comprise à la lecture de la description qui va suivre, donnée uniquement à titre d'exemple non limitatif et faite en se référant aux dessins dans lesquels:
- la figure 1 est une vue, dans un plan de coupe méridien, d'un pneumatique 10 selon l'invention,
- la figure 2 illustre un composite C permettant d'obtenir une nappe de frettage du pneumatique de la figure 1 ;
- la figure 3 illustre est une vue en coupe selon le plan III-III' du composite C de la figure 2 ;
- la figure 4 est un agrandissement du composite C selon l'invention;
- la figure 5 est une vue en détail d'un tissu selon l'invention ;
- la figure 6 est un agrandissement d'un élément de renfort de trame 50 selon l'invention ;
- la figure 7 est une illustration d'un procédé de tissage selon l'invention ; et
- la figure 8 illustre des courbes de capillarité de l'élément de renfort de trame 50 du tissu tramé T et de l'élément de renfort de trame du tissu TEDT.

Dans l'emploi du terme « radial », il convient de distinguer plusieurs utilisations différentes du mot par l'homme du métier. Premièrement, l'expression se réfère à un rayon du pneumatique. C'est dans ce sens qu'on dit d'un point A qu'il est « radialement intérieur » à un point B (ou « radialement à l'intérieur » du point B) s'il est plus près de l'axe de rotation du pneumatique que le point B. Inversement, un point C est dit « radialement extérieur à » un point D (ou « radialement à l'extérieur » du point D) s'il est plus éloigné de l'axe de rotation du pneumatique que le point D. On dira qu'on avance « radialement vers l'intérieur (ou l'extérieur) » lorsqu'on avance en direction des rayons plus petits (ou plus grands). Lorsqu'il est question de distances radiales, ce sens du terme s'applique également.

Par « coupe radiale » ou « section radiale » on entend ici une coupe ou une section selon un plan qui comporte l'axe de rotation du pneumatique.

Le « plan circonférentiel médian » M du pneumatique est le plan qui est normal à l'axe de rotation du pneumatique et qui se situe à équidistance des structures annulaires de renfort de chaque bourrelet.

Le « plan tangentiel médian » TT du pneumatique est le plan qui est perpendiculaire au « plan circonférentiel médian » M.

Une direction « axiale » est une direction parallèle à l'axe de rotation du pneumatique.

Une direction « circonférentielle » est une direction qui est perpendiculaire à la fois à un rayon du pneumatique et à la direction axiale.

### EXEMPLE DE PNEUMATIQUE SELON L'INVENTION

Dans les figures, on a représenté un repère X, Y, Z correspondant aux directions habituelles respectivement axiale (X), radiale (Y) et circonférentielle (Z) d'un pneumatique.

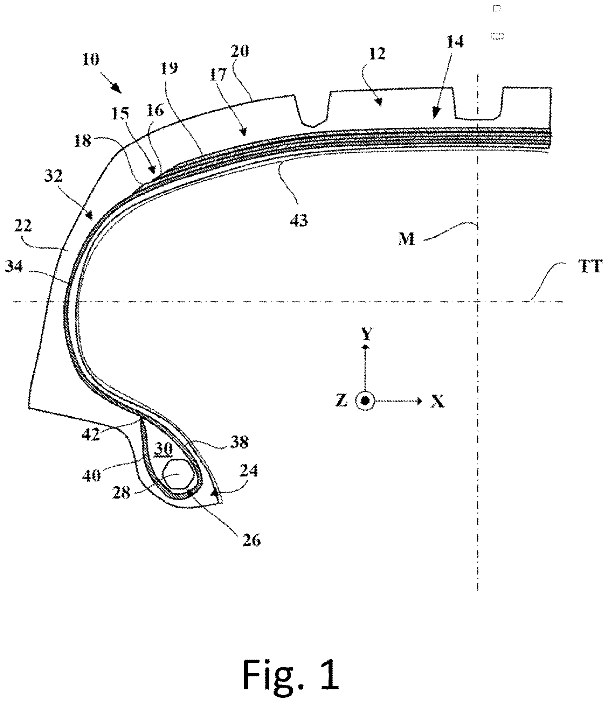

On a représenté schématiquement sur la figure 1, une vue en coupe radiale, d'un pneumatique selon un premier mode de réalisation de l'invention et désigné par la référence générale 10. Le pneumatique 10 est sensiblement de révolution autour d'un axe sensiblement parallèle à la direction axiale X. Le pneumatique 10 est ici destiné à un véhicule de tourisme.

Le pneumatique 10 comporte un sommet 12 comprenant une armature de sommet 14 comprenant une armature de travail 15 comprenant deux nappes de travail 16, 18 d'éléments de renfort de travail et une armature de frettage 17 comprenant une nappe de frettage 19 d'éléments de renfort de frettage. L'armature de sommet 14 est surmontée d'une bande de roulement 20 agencée radialement extérieure à l'armature de sommet 14. Ici, l'armature de frettage 17, la nappe de frettage 19, est radialement intercalée entre l'armature de travail 15 et la bande de roulement 20.

Le pneumatique comprend également deux flancs 22 prolongeant le sommet 12 radialement vers l'intérieur. Le pneumatique 10 comporte en outre deux bourrelets 24 radialement intérieurs aux flancs 22 et comportant chacun une structure annulaire de renfort 26, en l'occurrence une tringle 28, surmontée d'une masse de gomme 30 de bourrage sur tringle, ainsi qu'une armature de carcasse radiale 32.

L'armature de carcasse 32 comporte au moins une nappe de carcasse comprenant plusieurs éléments de renfort, la nappe étant ancrée à chacun des bourrelets 24 par un retournement autour de la tringle 28, de manière à former dans chaque bourrelet 24 un brin aller 38 s'étendant depuis les bourrelets à travers les flancs vers le sommet 12, et un brin retour 40, l'extrémité radialement extérieure 42 du brin retour 40 étant radialement à l'extérieur de la structure annulaire de renfort 26. L'armature de carcasse 32 s'étend ainsi depuis les bourrelets 24 à travers les flancs 22 jusque dans le sommet 12. L'armature de carcasse 32 est agencée radialement à l'intérieur de l'armature de sommet 14 et de l'armature de frettage 17. L'armature de carcasse 32 comprend une seule nappe carcasse 34.

Le pneumatique 10 comprend également une couche interne 43 d'étanchéité, de préférence en butyl, axialement intérieure aux flancs 22 et radialement intérieure à l'armature de sommet 14 et s'étendant entre les deux bourrelets 24.

Chaque nappe de travail 16, 18, de frettage 19 et de carcasse 34 comprend une composition polymérique dans laquelle sont noyés des éléments de renfort de la nappe correspondante. Chaque composition polymérique, ici une composition élastomérique, des nappes de travail 16, 18, de frettage 19 et de carcasse 34 est réalisée dans une composition conventionnelle pour calandrage d'éléments de renfort comprenant de façon classique un élastomère diénique, par exemple du caoutchouc naturel, une charge renforçante, par exemple du noir de carbone et/ou de la silice, un système de réticulation, par exemple un système de vulcanisation, de préférence comprenant du soufre, de l'acide stéarique et de l'oxyde de zinc, et éventuellement un accélérateur et/ou retardateur de vulcanisation et/ou divers additifs.

### EXEMPLE DE COMPOSITE SELON L'INVENTION

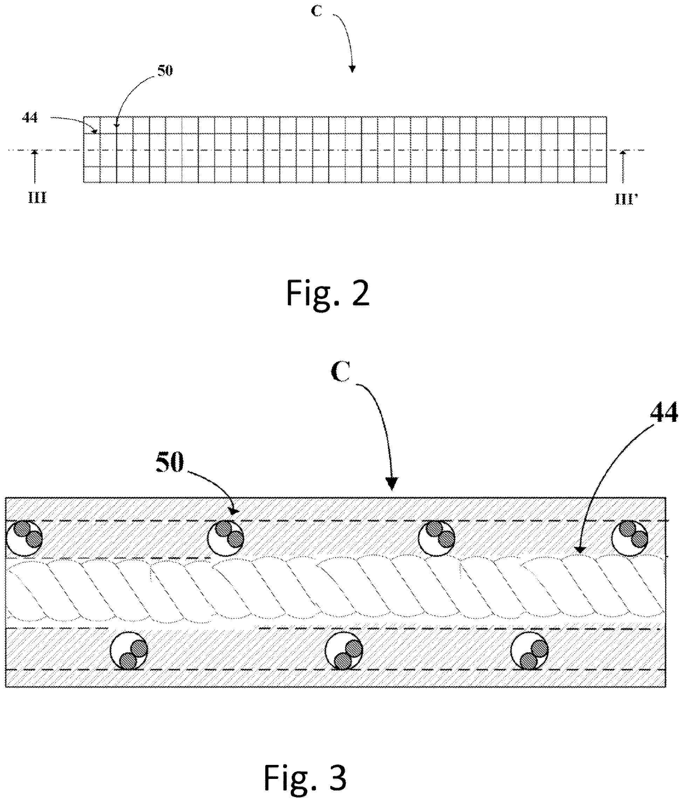

On va maintenant décrire en référence aux figures 2, 3 et 4 un composite à partir duquel est obtenue la nappe de frettage 19.

Le composite comprend un tissu T comprenant des éléments de renfort de chaine textiles 44 et des éléments de renfort de trame 50 noyés dans une composition d'élastomère. Les éléments de renfort de chaine 44 sont sensiblement parallèles les uns avec les autres et s'étendent selon une direction générale de chaine De et les éléments de renfort de trame 50 sont sensiblement parallèles les uns aux autres et s'étendant selon une direction générale dite de trame Dt différente de la direction générale de chaine Dc. La direction générale de trame Dt et la direction générale de chaine De forment un angle supérieur ou égal à 45°, de préférence allant de 80° à 110° et ici égale à 90°.

### EXEMPLE DE TISSU SELON L'INVENTION

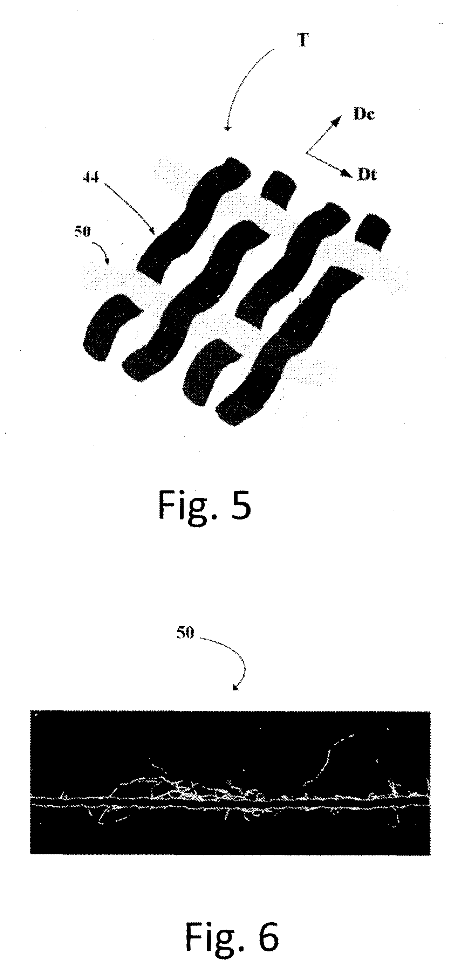

On va décrire ci-dessous le tissu T en référence à la figure 5.

Les éléments de renfort de trame 50 entrelacent les éléments de renfort de chaine 44.

Le taux de reprise d'humidité des éléments de renfort de trame 50 est inférieur ou égal à 2,0 %. Il est ici de 1,8%.

Les éléments de renfort de trame 50 sont ébouriffés comme indiqué dans la figure 6. Les éléments de renfort de trame 50 sont tels que le nombre d'éléments filaires sortant du diamètre de l'élément de renfort de trame 50 est supérieur ou égal à 1 250 d'éléments filaires par 100 mètres d'éléments de renfort de trame, de préférence supérieur ou égal à 5 000 d'éléments filaires par 100 mètres d'éléments de renfort de trame et plus préférentiellement supérieur ou égal à 7 500 d'éléments filaires par 100 mètres d'éléments de renfort de trame. Ici, il est de 8750 d'éléments filaires par 100 mètres d'éléments de renfort de trame 50.

On va décrire ci-dessous les éléments de renfort de chaine et de trame.

### Nature des brins de chaque élément de renfort de chaine et de trame

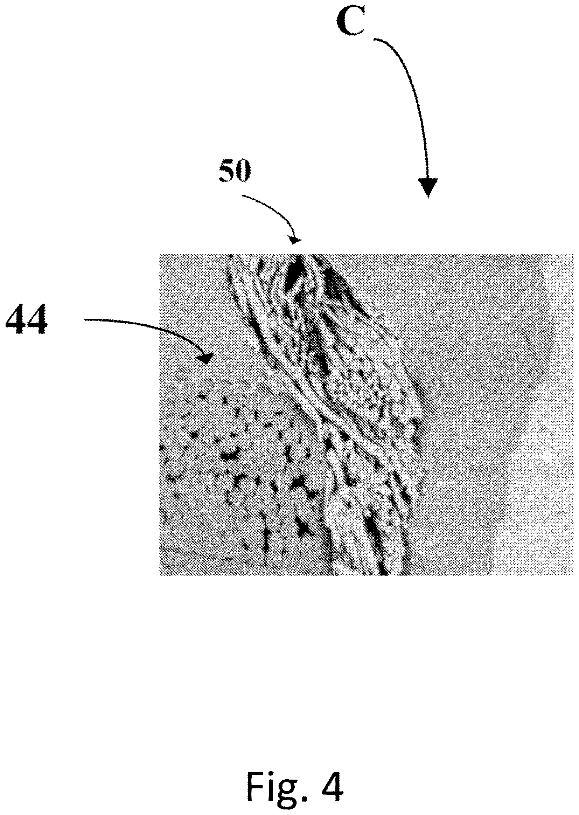

Comme représenté schématiquement sur la figure 3, chaque élément de renfort de chaine 44 comprend plusieurs brins multifilamentaires et comprend un assemblage constitué de deux brins multifilamentaires en polyamide aliphatique, les deux brins étant enroulés en hélice l'un autour de l'autre. Ici, le polyamide aliphatique est du Nylon 6,6. Chaque élément de renfort de chaine est équilibré en torsions. A des fins de précision de la description, la figure 4 est une vue en coupe de l'élément de renfort de chaine 44 et sur laquelle on distingue les filaments de chacun des brins.

Chaque élément de renfort de trame 50 comprend, pour au moins 50% de sa masse, un ou plusieurs filaments textiles et/ou plusieurs fibres textiles et de préférence est constitué d'un ou de plusieurs filaments textiles et/ou de plusieurs fibres textiles. Comme représenté sur la figure 6, chaque élément de renfort de trame 50 comprend au moins un brin comprenant une âme et une couche revêtant l'âme, l'âme comprenant au moins un filament et la couche comprenant plusieurs fibres courtes sortantes. Ici, chaque élément de renfort de trame est constitué d'un assemblage de deux brins comprenant une âme et une couche revêtant l'âme, l'âme comprenant au moins un filament et la couche comprenant plusieurs fibres courtes sortantes et rentrantes.

L'âme comprend plusieurs filaments synthétiques polymériques organiques et la couche comprend plusieurs fibres synthétiques polymériques organiques Ici chaque filament et chaque fibre sont choisis parmi les filaments et les fibres de polyester.

### Titre de chaque élément de renfort de chaine et de trame

Le titre du brin multifilamentaire de polyamide aliphatique de l'élément de renfort de chaine va de 80 à 120 tex, de préférence de 90 à 110 tex, plus préférentiellement de 90 à 100 tex. Ici le titre de chaque brin multifilamentaire de polyamide aliphatique de l'élément de renfort de chaine est de 94 tex.

La somme des titres des brins des éléments de renfort de trame 50 est inférieure strictement à 40 tex, de préférence inférieure ou égale à 30 tex et est supérieure ou égale à 2 tex et de préférence supérieure ou égale à 4 tex. Ici, la somme des titres des brins des éléments de renfort de trame 50 est égale à 22 tex.

Le titre de chaque brin d'élément de renfort de trame 50 va de 1 à 20 tex et de préférence de 10 à 15 tex. Ici, il est de 11 tex.

### Torsion de chaque élément de renfort de chaine et de trame

La torsion de chaque élément de renfort de chaine 44 va de 100 à 500 tours par mètre, de préférence de 250 à 390 tours par mètre et encore plus préférentiellement de 250 à 380 tours par mètre. Ici, elle est égale à 320 tours par mètre.

Les éléments de renfort de chaine 44 comprennent un assemblage constitué de deux brins de polyamide aliphatique, les deux brins sont enroulés en hélice l'un autour de l'autre à une torsion de 320 tours par mètre et l'élément de renfort est équilibré en torsions.

La torsion de chaque élément de renfort de trame 50 va de 250 à 1500 tours par mètre, de préférence de 500 à 1300 tours par mètre, plus préférentiellement de 900 à 1200 tours par mètre. Ici la torsion de chaque élément de renfort de trame 50 est de 1100 tours par mètre.

Les éléments de renfort de trame 50 comprennent un assemblage constitué de deux brins de 11 tex enroulés en hélice l'un autour de l'autre à une torsion de 1100 tours par mètres et l'élément de renfort de trame 50 est équilibré en torsions.

### Densité des éléments de renfort de trame dans le tissu

La densité des éléments de renfort de trame 50 va de 3,0 à 8,0 éléments de renforts de trame par dm de tissu T, de préférence de 3,0 à 6,0 éléments de renforts de trame par dm de tissu T et plus préférentiellement de 3,0 à 5,5 éléments de renforts de trame par dm de tissu T. Ici, la densité des éléments de renfort de trame 50 est égale à 5,0 éléments de renforts de trame par dm de tissu T.

### Diamètre des éléments de renfort de trame

Le diamètre des éléments de renfort de trame 50 est inférieur strictement à 0,50 mm et de préférence inférieur ou égal à 0,23 mm. Il est ici de 0,19 mm.

### PROCEDE DE FABRICATION DU TISSU SELON L'INVENTION

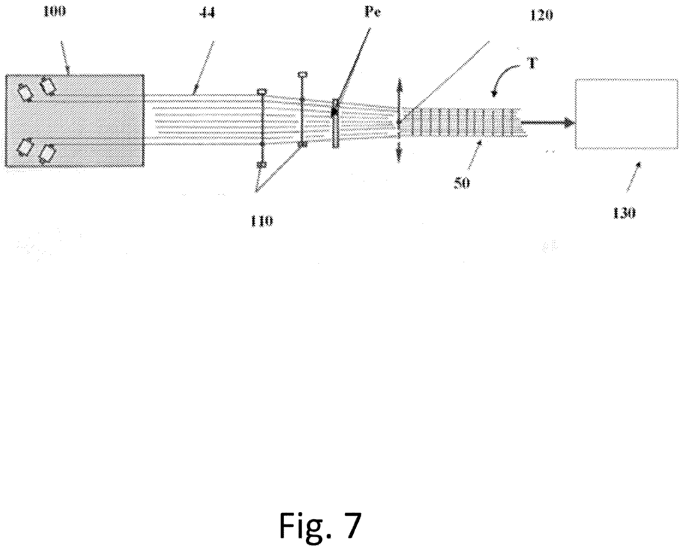

On va maintenant décrire en référence à la figure 7, le procédé de fabrication du tissu tramé T. Dans une étape de déroulage 100, on déroule plusieurs éléments de renfort de chaine 44 sur un métier à tisser à jet d'air; dans une étape de séparation 110, on sépare les éléments de renfort de chaine 44 en une première et une deuxième nappe d'éléments de renfort de chaine, dans une étape d'entrelacement 120, on entrelace alternativement les éléments de renfort de trame 50 avec les éléments de renfort de chaine 44 de la première nappe d'éléments de renfort de chaine puis de la deuxième nappe d'éléments de renfort de chaine et dans une étape d'enroulage 130, on enroule le tissu tramé T sur une bobine de stockage ; dans lequel le taux de reprise d'humidité des éléments de renfort de trame 50 est de 1,8% et dans lequel les éléments de renfort de trame 50 sont ébouriffés.

Ici le métier à tisser à jet d'air utilisé est une machine à jet d'air A1 de la marque Dornier.

Dans une étape 140, on imprègne le tissu tramé T d'une composition adhésive, par exemple une composition adhésive de type RFL (acronyme pour Résorcinol-Formaldéhyde-Latex) et le tissu T subit des étapes de traitement thermique afin de faire réticuler, au moins en partie, la composition adhésive.

### PROCEDE DE FABRICATION DU COMPOSITE SELON L'INVENTION

On fabrique chaque composite C en noyant le tissu T dans la composition d'élastomère, par exemple par calandrage. Durant une telle étape de calandrage, bien connue de l'homme du métier, on fait défiler le tissu T et on amène deux bandes réalisées dans une composition d'élastomère, appelées skims, de part et d'autre des éléments de renfort de façon à prendre en sandwich les éléments de renforts entre les deux skims. On noie ainsi le tissu dans la composition d'élastomère.

### PROCEDE DE FABRICATION DU PNEUMATIQUE SELON L'INVENTION

Le procédé de fabrication du pneumatique est celui utilisé classiquement par l'homme du métier. Au cours de ce procédé et comme déjà décrit précédemment, on dispose successivement, lors d'une première série d'étapes d'assemblages, différentes nappes et composites. Puis, on conforme l'ébauche ainsi obtenue. Ensuite, on dispose d'autres nappes et composites destinés à former le sommet 12 du pneumatique 10, dont le composite selon l'invention destiné à former la nappe de frettage 19 du pneumatique 10. Enfin, on vulcanise l'ébauche ainsi obtenue pour obtenir le pneumatique 10.

### MESURES ET TESTS COMPARATIFS

On a résumé dans le tableau 1 les caractéristiques et le procédé de fabrication d'un tissu de l'état de la technique, de tissus comparatifs TC1 et TC2 et d'un tissu T et T' selon l'invention. La mesure de l'ébouriffage selon la première méthode est indiquée dans le tableau « Ebourriffage méthode 1 » et la mesure de l'ébouriffage selon la deuxième méthode est indiquée dans le tableau « Ebourriffage méthode 2 ».

**[Tableau 1]**

| **Tissu** | **TEDT** | **TC1** | **TC2** | **T** | **T'** | **T"** |
|---|---|---|---|---|---|---|
| Nature des brins de chaine / nombre de brins | Nylon/2 | Nylon/2 | Nylon/2 | Nylon/2 | Nylon/2 | Nylon/2 |
| Torsion des brins de chaine (t/m) | 250/250 | 320/320 | 320/320 | 320/320 | 320/320 | 320/320 |
| Titre des brins de chaine (tex) | 140/140 | 94/94 | 94/94 | 94/94 | 94/94 | 94/94 |
| Nature des brins de trame/ nombre de brins | Coton/1 | Coton/1 | PET/1 | PET/2 | PET/1 | PET/2 |
| Torsion brins de trame (t/m) | 750 | 750 | 750 | 1100/1100 | 750 | 750/750 |
| Titre des brins de trame (tex) | 30 | 30 | 28 | 11/11 | 21 | 10/10 |
| TxH (%) | 8,0 | 8,0 | 0,9 | 1,8 | 0.6 | 0.5 |
| Ebouriffage méthode 1 | >12500 | >12500 | 0 | 8750 | 3800 | 3882 |
| Ebouriffage méthode 2 | 17756 | 17756 | 0 | 16190 | 7431 | 9676 |
| Diamètre trame (mm) | 0,23 | 0,23 | 0,19 | 0,19 | 0,18 | 0,20 |
| Tissage métier à jet d'air | oui | oui | non | oui | oui | oui |

| **Composite** | **CEDT** | **C1** | **C2** | **C** | **C'** | **C"** |
|---|---|---|---|---|---|---|
| Densité brins de trame (fils/dm) | 5,5 | 5,5 | - | 5,0 | 5,0 | 5,0 |

On note que le tissu comparatif TC2 n'est pas tissable via un procédé de tissage à jet d'air. Ainsi aucun composite ne peut être obtenu. Les tissus T, T' et T" selon l'invention sont tissables.

On a comparé la capacité capillaire des éléments de renfort de trame encollé d'une composition adhésive à l'aide d'un tensiomètre qui permet de mesurer des évolutions de masse au cours du temps lorsque l'élément de renfort est au contact d'un liquide. On peut alors obtenir plusieurs informations :
- Mesure de la masse en fonction du temps sur des éléments de renfort (capillarité) ;
- Mesure de l'angle de contact pour déterminer l'affinité du matériau de l'élément de renfort et d'un liquide, ici l'eau ; et
- Mesure de tension de surface de l'eau.

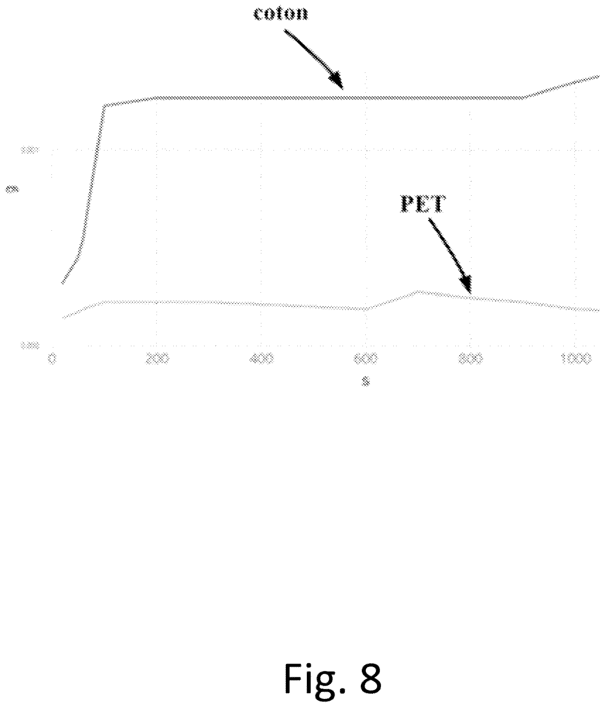

On a représenté sur la figure 8 la courbe de l'évolution de la masse en grammes de l'élément de renfort encollé d'une composition adhésive à base de phloroglucinol et de téréphtaldéhyde en fonction du temps en seconde lorsque le renfort est trempé dans de l'eau. Cette courbe est représentative de ce qui se passe dans le tissu tramé lorsqu'il est au contact de l'eau. On constate que l'élément de renfort de trame 50 en PET encollé d'une composition adhésive utilisé dans le tissu tramé T selon l'invention reprend 10 fois moins d'eau en comparaison avec l'élément de renfort de trame en coton utilisé dans le tissu tramé TEDT. On constate également que l'élément de renfort de trame 50 en PET utilisé dans le tissu tramé T selon l'invention absorbe très peu d'eau dès le départ et que son taux augmente très peu au cours du temps.

Cet essai démontre bien l'hypothèse des inventeurs qu'en sélectionnant un élément de renfort de trame ayant un faible taux de reprise d'humidité, on diminue la propagation d'eau dans les renforts textiles et ainsi la propagation d'agents corrosifs qui oxydent les éléments de renfort métalliques de l'armature de sommet.

Le comportement des éléments de renfort de trame encollé d'une composition adhésive utilisés dans les tissus tramés T' et T" selon l'invention trempé dans de l'eau est identique à celui de l'élément de renfort 50 de trame T : ils absorbent très peu d'eau dès le départ et que leur taux augmente très peu au cours du temps.

### Comparaison des pneumatiques

On a comparé le pneumatique 10 selon l'invention à des pneumatiques PEDT de l'état de la technique et P1 témoin comprenant chacun respectivement un composite C, CEDT et C1 obtenue à partir respectivement des tissus T, TEDT et TC1.

On a comparé les pneumatiques et notamment leur résistance à la corrosion en utilisant le test de corrosion décrit ci-après : on fait rouler les pneumatiques sur une route caillouteuse dans de l'eau salée pendant 5000 kilomètres. On mesure ensuite la surface totale de poches d'oxydation aux épaules des pneumatiques, c'est-à-dire les endroits où il y a contact entre les éléments de renforts textiles et les câbles métalliques de la nappe de sommet, et donc les surfaces où il y a corrosion via la propagation de l'eau par la nappe de frettage.

On a rassemblé les résultats dans le tableau 2 ci-dessous.

On a indiqué dans le tableau 2, les résistances à la corrosion des pneumatiques testés. Une très mauvaise résistance à la corrosion est indiquée par le signe « -- » et une mauvaise résistance à la corrosion est indiquée par le signe « - ». Une bonne résistance à la corrosion est indiquée par le signe « + ». Une très bonne résistance à la corrosion est indiquée par le signe « ++ ».

**[Tableau 2]**

| **Pneumatique** | **PEDT** | **P1** | **10** |
|---|---|---|---|
| **Résistance à la corrosion** | **-** | **-** | **++** |

Ainsi, on note que le pneumatique 10 selon l'invention présente des performances de résistance à la corrosion supérieures à celles du pneumatique de l'état de la technique PEDT et au pneumatique comparatif P1.

L'invention ne se limite pas aux modes de réalisation précédemment décrits et n'est limitée que par les revendications ci-jointes.

On pourra également combiner les caractéristiques des différents modes de réalisation et variantes décrits ou envisagés ci-dessus sous réserve que celles-ci soient compatibles entre elles.

## Revendications

1. Tissu tramé (T) pour pneumatique (10) comprenant plusieurs éléments de renfort de chaine textiles (44) et plusieurs éléments de renfort de trame (50), les éléments de renfort de trame (50) entrelaçant les éléments de renfort de chaine (44) et étant ébouriffés, **caractérisé en ce que** le taux de reprise d'humidité TxH des éléments de renfort de trame (50) est inférieur ou égal à 2,0 %, le taux de reprise d'humidité étant déterminé selon la norme ASTM D 885/D 885MA de janvier 2010 et **en ce que** les éléments de renfort de trame (50) sont tels que le nombre d'éléments filaires sortant du diamètre de l'élément de renfort de trame (50) est supérieur ou égal à 1 250 éléments filaires par 100 mètres d'éléments de renfort de trame, le nombre d'éléments filaires sortant étant déterminé selon une première méthode de mesure de l'ébouriffage dans laquelle on compte tout élément filaire croisant une ligne perpendiculaire à la tangente au diamètre externe de l'élément de renfort dans le sens de la longueur de l'élément de renfort de trame.

2. Tissu (T) selon la revendication 1, dans lequel les éléments de renfort de trame (50) sont tels que le nombre d'éléments filaires sortant du diamètre de l'élément de renfort de trame (50) est supérieur ou égal à 7 500 éléments filaires par 100 mètres d'éléments de renfort de trame.

3. Tissu tramé (T) pour pneumatique (10) comprenant plusieurs éléments de renfort de chaine textiles (44) et plusieurs éléments de renfort de trame (50), les éléments de renfort de trame (50) entrelaçant les éléments de renfort de chaine (44) et étant ébouriffés, **caractérisé en ce que** le taux de reprise d'humidité TxH des éléments de renfort de trame (50) est inférieur ou égal à 2,0 %, le taux de reprise d'humidité étant déterminé selon la norme ASTM D 885/D 885MA de janvier 2010 et **en ce que** les éléments de renfort de trame (50) sont tels que le nombre d'éléments filaires de 1 à 2 mm sortant du diamètre de l'élément de renfort de trame est supérieur ou égal à 5000 éléments filaires par 100 mètres d'éléments de renfort de trame, le nombre d'éléments filaires sortant étant déterminé selon une deuxième méthode de mesure de l'ébouriffage dans laquelle on mesure le nombre d'éléments filaires sortant du diamètre de l'élément de renfort de trame qui ont une taille comprise entre 1 et 2 mm si on trace une ligne perpendiculaire à la tangente au diamètre externe de l'élément de renfort dans le sens de la longueur de l'élément de renfort de trame.

4. Tissu (T) selon la revendication 3, dans lequel les éléments de renfort de trame (50) sont tels que le nombre d'éléments filaires de 1 à 2 mm sortant du diamètre de l'élément de renfort de trame est supérieur ou égal à 6 000 éléments filaires par 100 mètres d'éléments de renfort de trame et plus préférentiellement supérieur ou égal à 7 000 éléments filaires par 100 mètres d'éléments de renfort de trame..

5. Tissu (T) selon l'une quelconque des revendications précédentes, dans lequel les éléments de renfort de chaine (44) sont sensiblement parallèles les uns avec les autres et s'étendent selon une direction générale de chaine (Dc) et les éléments de renfort de trame (50) sont sensiblement parallèles les uns aux autres et s'étendent selon une direction générale dite de trame (Dt) différente de la direction générale de chaine (Dc) avec de préférence la direction générale de trame (Dt) et la direction générale de chaine (Dc) forment un angle supérieur ou égal à 45°, et plus préférentiellement l'angle va de 80° à 110°.

6. Tissu (T) selon l'une selon les revendications 1 à 5, dans lequel chaque élément de renfort de chaine textile (44) comprend plusieurs brins multifilamentaires.

7. Tissu (T) selon la revendication précédente, dans lequel chaque élément de renfort de chaine (44) comprend un assemblage constitué de deux brins multifilamentaires, les deux brins étant enroulés en hélice l'un autour de l'autre et de préférence, l'élément de renfort étant équilibré en torsions.

8. Tissu (T) selon l'une quelconque des revendications précédentes, dans lequel chaque élément de renfort de trame (50) comprend, pour au moins 50% de sa masse, un ou plusieurs filaments textiles et/ou plusieurs fibres textiles et de préférence est constitué d'un ou de plusieurs filaments textiles et/ou de plusieurs fibres textiles.

9. Tissu (T) selon l'une quelconque des revendications précédentes, dans lequel chaque élément de renfort de trame (50) comprend au moins un brin comprenant une âme et une couche revêtant l'âme, l'âme comprenant au moins un filament et la couche comprenant plusieurs fibres courtes sortantes.

10. Tissu(T) selon la revendication précédente, dans lequel l'âme comprend plusieurs filaments synthétiques polymériques organiques et la couche comprend plusieurs fibres synthétiques polymériques organiques.

11. Tissu (T) selon la revendication précédente, dans lequel chaque filament et/ou chaque fibre sont choisis parmi les filaments et les fibres de polyester, les filaments et les fibres de polyamide, les filaments et les fibres de polycétone, les filaments et les fibres de polyuréthane, les filaments et les fibres d'acrylique, les filaments et les fibres de polyoléfine, les filaments et les fibres de polyétheréthercétone et les assemblages de ces filaments et de ces fibres, de préférence parmi les filaments et les fibres de polyester, les filaments et les fibres de polyamide et les assemblages de ces filaments et de ces fibres et plus préférentiellement les filaments et les fibres synthétiques organiques sont des filaments et des fibres de polyester.

12. Tissu (T) selon l'une quelconque des revendications précédentes, dans lequel le diamètre de chaque élément de renfort de trame (50) est inférieur strictement à 0,50 mm et de préférence inférieur ou égal à 0,23 mm.

13. Tissu (T) selon l'une quelconque des revendications précédentes, dans lequel la densité des éléments de renfort de trame (50) va de 3,0 à 8,0 éléments de renforts de trame par dm de tissu (T), de préférence de 3,0 à 6,0 éléments de renforts de trame par dm de tissu (T)et plus préférentiellement de 3,0 à 5,5 éléments de renforts de trame par dm.de tissu (T).

14. Composite d'élastomère (C) pour pneumatique (10) comprenant au moins un tissu (T) selon l'une quelconque des revendications précédentes noyé dans une composition d'élastomère.

15. Pneumatique (10) comprenant une armature de frettage (17) comprenant au moins une nappe de frettage (19) **caractérisé en ce que** la nappe de frettage (19) comprend un composite d'élastomère (C) selon la revendication 14.

16. Procédé de fabrication d'un tissu tramé (T) dans lequel :
- dans une étape de déroulage (100), on déroule plusieurs éléments de renfort de chaine (44) à partir d'un cantre (100) sur un métier à jet d'air;
- dans une étape de séparation (110), on sépare les éléments de renfort de chaine (44) en une première et une deuxième nappe d'éléments de renfort de chaine;
- dans une étape d'entrelacement (120), on entrelace alternativement au moins un élément de renfort de trame (50) avec des éléments de renfort de chaine (44) de la première nappe d'éléments de renfort de chaine puis de la deuxième nappe d'éléments de renfort de chaine;
- dans une étape d'enroulage(130), on enroule le tissu tramé (T) sur une bobine de stockage ;
dans lequel, le taux de reprise d'humidité TxH des éléments de renfort de trame (50) est inférieur ou égal à 2,0 %; le taux de reprise d'humidité étant déterminé selon la norme ASTM D 885/D 885MA de janvier 2010 et ;
dans lequel les éléments de renfort de trame (50) sont ébouriffés et sont tels que le nombre d'éléments filaires sortant du diamètre de l'élément de renfort de trame (50) est supérieur ou égal à 1 250 éléments filaires par 100 mètres d'éléments de renfort de trame, le nombre d'éléments filaires sortant étant déterminé selon une première méthode de mesure de l'ébouriffage dans laquelle on compte tout élément filaire croisant une ligne perpendiculaire à la tangente au diamètre externe de l'élément de renfort dans le sens de la longueur de l'élément de renfort de trame.

17. Procédé de fabrication d'un tissu tramé (T) dans lequel :
- dans une étape de déroulage (100), on déroule plusieurs éléments de renfort de chaine (44) à partir d'un cantre (100) sur un métier à jet d'air;
- dans une étape de séparation (110), on sépare les éléments de renfort de chaine (44) en une première et une deuxième nappe d'éléments de renfort de chaine;
- dans une étape d'entrelacement (120), on entrelace alternativement au moins un élément de renfort de trame (50) avec des éléments de renfort de chaine (44) de la première nappe d'éléments de renfort de chaine puis de la deuxième nappe d'éléments de renfort de chaine;
- dans une étape d'enroulage(130), on enroule le tissu tramé (T) sur une bobine de stockage ;
dans lequel, le taux de reprise d'humidité TxH des éléments de renfort de trame (50) est inférieur ou égal à 2,0 %; le taux de reprise d'humidité étant déterminé selon la norme ASTM D 885/D 885MA de janvier 2010 et ;
dans lequel les éléments de renfort de trame (50) sont ébouriffés et sont tels que le nombre d'éléments filaires de 1 à 2 mm sortant du diamètre de l'élément de renfort de trame est supérieur ou égal à 5000 éléments filaires par 100 mètres d'éléments de renfort de trame, le nombre d'éléments filaires sortant étant déterminé selon une deuxième méthode de mesure de l'ébouriffage dans laquelle on mesure le nombre d'éléments filaires sortant du diamètre de l'élément de renfort de trame qui ont une taille comprise entre 1 et 2 mm si on trace une ligne perpendiculaire à la tangente au diamètre externe de l'élément de renfort dans le sens de la longueur de l'élément de renfort de trame.

## Patentansprüche

1. Gewebtes Gewebe (T) für einen Reifen (10), umfassend mehrere textile Kettverstärkungselemente (44) und mehrere Schussverstärkungselemente (50), wobei die Schussverstärkungselemente (50) mit den Kettverstärkungselementen (44) verflochten sind und haarig sind, **dadurch gekennzeichnet, dass** die Feuchtigkeitsaufnahme TxH der Schussverstärkungselemente (50) kleiner oder gleich 2,0 % ist, wobei die Feuchtigkeitsaufnahme nach der Norm ASTM D 885/D 885MA aus Januar 2010 bestimmt wird, und dadurch, dass die Schussverstärkungselemente (50) derart sind, dass die Anzahl von aus dem Durchmesser des Schussverstärkungselements (50) herausragenden fadenartigen Elementen größer oder gleich 1250 fadenartige Elemente je 100 Meter Schussverstärkungselemente ist, wobei die Anzahl von herausragenden fadenartigen Elementen nach einer ersten Methode zur Messung der Haarigkeit bestimmt wird, bei der jedes fadenartige Element gezählt wird, das eine senkrecht zur Tangente am Außendurchmesser des Verstärkungselements in Richtung der Länge des Schussverstärkungselements verlaufende Linie kreuzt.

2. Gewebe (T) nach Anspruch 1, wobei die Schussverstärkungselemente (50) derart sind, dass die Anzahl von aus dem Durchmesser des Schussverstärkungselements (50) herausragenden fadenartigen Elementen größer oder gleich 7500 fadenartige Elemente je 100 Meter Schussverstärkungselemente ist.

3. Gewebtes Gewebe (T) für einen Reifen (10), umfassend mehrere textile Kettverstärkungselemente (44) und mehrere Schussverstärkungselemente (50), wobei die Schussverstärkungselemente (50) mit den Kettverstärkungselementen (44) verflochten sind und haarig sind, **dadurch gekennzeichnet, dass** die Feuchtigkeitsaufnahme TxH der Schussverstärkungselemente (50) kleiner oder gleich 2,0 % ist, wobei die Feuchtigkeitsaufnahme nach der Norm ASTM D 885/D 885MA aus Januar 2010 bestimmt wird, und dadurch, dass die Schussverstärkungselemente (50) derart sind, dass die Anzahl von aus dem Durchmesser des Schussverstärkungselements herausragenden fadenartigen Elementen von 1 bis 2 mm größer oder gleich 5000 fadenartige Elemente je 100 Meter Schussverstärkungselemente ist, wobei die Anzahl von herausragenden fadenartigen Elementen nach einer zweiten Methode zur Messung der Haarigkeit bestimmt wird, bei der die Anzahl von aus dem Durchmesser des Schussverstärkungselements herausragenden fadenartigen Elementen, die eine Größe zwischen 1 und 2 mm haben, gemessen wird, wenn eine senkrecht zur Tangente am Außendurchmesser des Verstärkungselements in Richtung der Länge des Schussverstärkungselements verlaufende Linie gezeichnet wird.

4. Gewebe (T) nach Anspruch 3, wobei die Schussverstärkungselemente (50) derart sind, dass die Anzahl von aus dem Durchmesser des Schussverstärkungselements herausragenden fadenartigen Elementen von 1 bis 2 mm größer oder gleich 6000 fadenartige Elemente je 100 Meter Schussverstärkungselemente und stärker bevorzugt größer oder gleich 7000 fadenartige Elemente je 100 Meter Schussverstärkungselemente ist.

5. Gewebe (T) nach einem der vorhergehenden Ansprüche, wobei die Kettverstärkungselemente (44) im Wesentlich parallel zueinander sind und sich entlang einer Kettgrundrichtung (Dc) erstrecken und die Schussverstärkungselemente (50) im Wesentlichen parallel zueinander sind und sich entlang einer sogenannten Schussgrundrichtung (Dt) erstrecken, die verschiedenen von der Kettgrundrichtung (Dc) ist, wobei die Schussgrundrichtung (Dt) und die Kettgrundrichtung (Dc) bevorzugt einen Winkel größer oder gleich 45° bilden und der Winkel stärker bevorzugt von 80° bis 110° reicht.

6. Gewebe (T) nach einem der Ansprüche 1 bis 5, wobei jedes textile Kettverstärkungselement (44) mehrere Multifilamentstränge umfasst.

7. Gewebe (T) nach dem vorhergehenden Anspruch, wobei jedes Kettverstärkungselement (44) einen Verband umfasst, der aus zwei Multifilamentsträngen besteht, wobei die beiden Stränge helixartig umeinander gewunden sind, und wobei das Verstärkungselement bevorzugt drallausgeglichen ist.

8. Gewebe (T) nach einem der vorhergehenden Ansprüche, wobei jedes Schussverstärkungselement (50), bei mindestens 50 % seiner Masse, ein oder mehrere textile Filamente und/oder mehrere textile Fasern umfasst und bevorzugt aus einem oder mehreren textilen Filamenten und/oder aus mehreren textilen Fasern besteht.

9. Gewebe (T) nach einem der vorhergehenden Ansprüche, wobei jedes Schussverstärkungselement (50) mindestens einen Strang umfasst, der eine Seele und eine die Seele überziehende Schicht umfasst, wobei die Seele mindestens ein Filament umfasst und wobei die Schicht mehrere herausragende kurze Fasern umfasst.

10. Gewebe (T) nach dem vorhergehenden Anspruch, wobei die Seele mehrere organische polymerische synthetische Filamente umfasst und die Schicht mehrere organische polymerische synthetische Fasern umfasst.

11. Gewebe (T) nach dem vorhergehenden Anspruch, wobei jedes Filament und/oder jede Faser aus den Polyesterfilamenten und -fasern, den Polyamidfilamenten und -fasern, den Polyketonfilamenten und -fasern, den Polyurethanfilamenten und -fasern, den Acrylfilamenten und -fasern, den Polyolefinfilamenten und -fasern, den Polyetheretherketonfilamenten und -fasern und den Verbänden dieser Filamente und dieser Fasern, bevorzugt aus den Polyesterfilamenten und -fasern, den Polyamidfilamenten und -fasern und den Verbänden dieser Filamente und dieser Fasern ausgewählt ist und die organischen synthetischen Filamente und Fasern stärker bevorzugt Polyesterfilamente und -fasern sind.

12. Gewebe (T) nach einem der vorhergehenden Ansprüche, wobei der Durchmesser jedes Schussverstärkungselements (50) strikt kleiner als 0,50 mm und bevorzugt kleiner oder gleich 0,23 mm ist.

13. Gewebe (T) nach einem der vorhergehenden Ansprüche, wobei die Dichte der Schussverstärkungselemente (50) von 3,0 bis 8,0 Schussverstärkungselemente je dm Gewebe (T), bevorzugt von 3,0 bis 6,0 Schussverstärkungselemente je dm Gewebe (T) und stärker bevorzugt von 3,0 bis 5,5 Schussverstärkungselemente je dm Gewebe (T) reicht.

14. Elastomer-Verbundmaterial (C) für einen Reifen (10), umfassend mindestens ein Gewebe (T) nach einem der vorhergehenden Ansprüche, das in eine Elastomerzusammensetzung eingebettet ist.

15. Reifen (10), umfassend eine Umreifungsverstärkung (17), die mindestens eine Umreifungslage (19) umfasst, **dadurch gekennzeichnet, dass** die Umreifungslage (19) ein Elastomer-Verbundmaterial (C) nach Anspruch 14 umfasst.

16. Verfahren zur Herstellung eines gewebten Gewebes (T), wobei:
- in einem Abhaspelschritt (100) mehrere Kettverstärkungselemente (44) von einem Spulengatter (100) auf einer Luftdüsenwebmaschine abgehaspelt werden;
- in einem Trennschritt (110) die Kettverstärkungselemente (44) in eine erste und eine zweite Kettverstärkungselementelage getrennt werden;
- in einem Verflechtungsschritt (120) abwechselnd mindestens ein Schussverstärkungselement (50) mit Kettverstärkungselementen (44) der ersten Kettverstärkungselementelage, dann der zweiten Kettverstärkungselementelage verflochten wird;
- in einem Aufhaspelschritt (130) das gewebte Gewebe (T) auf eine Speicherspule aufgehaspelt wird;
wobei die Feuchtigkeitsaufnahme TxH der Schussverstärkungselemente (50) kleiner oder gleich 2,0 % ist; wobei die Feuchtigkeitsaufnahme nach der Norm ASTM D 885/D 885MA aus Januar 2010 bestimmt wird, und; wobei die Schussverstärkungselemente (50) haarig sind und derart sind, dass die Anzahl von aus dem Durchmesser des Schussverstärkungselements (50) herausragenden fadenartigen Elementen größer oder gleich 1250 fadenartige Elemente je 100 Meter Schussverstärkungselemente ist, wobei die Anzahl von herausragenden fadenartigen Elementen nach einer ersten Methode zur Messung der Haarigkeit bestimmt wird, bei der jedes fadenartige Element gezählt wird, das eine senkrecht zur Tangente am Außendurchmesser des Verstärkungselements in Richtung der Länge des Schussverstärkungselements verlaufende Linie kreuzt.

17. Verfahren zur Herstellung eines gewebten Gewebes (T), wobei:
- in einem Abhaspelschritt (100) mehrere Kettverstärkungselemente (44) von einem Spulengatter (100) auf einer Luftdüsenwebmaschine abgehaspelt werden;
- in einem Trennschritt (110) die Kettverstärkungselemente (44) in eine erste und eine zweite Kettverstärkungselementelage getrennt werden;
- in einem Verflechtungsschritt (120) abwechselnd mindestens ein Schussverstärkungselement (50) mit Kettverstärkungselementen (44) der ersten Kettverstärkungselementelage, dann der zweiten Kettverstärkungselementelage verflochten wird;
- in einem Aufhaspelschritt (130) das gewebte Gewebe (T) auf eine Speicherspule aufgehaspelt wird;
wobei die Feuchtigkeitsaufnahme TxH der Schussverstärkungselemente (50) kleiner oder gleich 2,0 % ist; wobei die Feuchtigkeitsaufnahme nach der Norm ASTM D 885/D 885MA aus Januar 2010 bestimmt wird, und; wobei die Schussverstärkungselemente (50) haarig sind und derart sind, dass die Anzahl von aus dem Durchmesser des Schussverstärkungselements herausragenden fadenartigen Elementen von 1 bis 2 mm größer oder gleich 5000 fadenartige Elemente je 100 Meter Schussverstärkungselemente ist, wobei die Anzahl von herausragenden fadenartigen Elementen nach einer zweiten Methode zur Messung der Haarigkeit bestimmt wird, bei der die Anzahl von aus dem Durchmesser des Schussverstärkungselements herausragenden fadenartigen Elementen, die eine Größe zwischen 1 und 2 mm haben, gemessen wird, wenn eine senkrecht zur Tangente am Außendurchmesser des Verstärkungselements in Richtung der Länge des Schussverstärkungselements verlaufende Linie gezeichnet wird.

## Claims

1. Weft fabric (T) for tyres (10) , comprising several textile warp reinforcing elements (44) and several weft reinforcing elements (50), the weft reinforcing elements (50) interweave the warp reinforcing elements (44) and hairy, **characterized in that** the moisture regain MR of the weft reinforcing elements (50) is less than or equal to 2.0%, the moisture regain being determined according to standard ASTM D 885/D 885MA of January 2010 and the weft reinforcing elements (50) are such that the number of threadlike elements protruding from the diameter of the weft reinforcing element (50) is greater than or equal to 1250 threadlike elements per 100 metres of weft reinforcing elements, the number of protruding threadlike elements being determined according to a first method of measuring the hairiness in which any threadlike element crossing a line perpendicular to the tangent to the external diameter of the reinforcing element in the direction of the length of the weft reinforcing element is counted.

2. Fabric (T) according to Claim 1, wherein the weft reinforcing elements (50) are such that the number of threadlike elements protruding from the diameter of the weft reinforcing element (50) is greater than or equal to 7500 threadlike elements per 100 metres of weft reinforcing elements.

3. Weft fabric (T) for tyres (10) , comprising several textile warp reinforcing elements (44) and several weft reinforcing elements (50), the weft reinforcing elements (50) interweave the warp reinforcing elements (44) and hairy, **characterized in that** the moisture regain MR of the weft reinforcing elements (50) is less than or equal to 2.0%, the moisture regain being determined according to standard ASTM D 885/D 885MA of January 2010 and the weft reinforcing elements (50) are such that the number of 1 to 2 mm threadlike elements protruding from the diameter of the weft reinforcing element is greater than or equal to 5000 threadlike elements per 100 metres of weft reinforcing elements, the number of protruding threadlike elements being determined according to a second method of measuring the hairiness in which the number of threadlike elements protruding from the diameter of the weft reinforcing element which have a size of between 1 and 2 mm if a line is plotted perpendicular to the tangent to the external diameter of the reinforcing element in the direction of the length of the weft reinforcing element, are measured.

4. Fabric (T) according to Claim 3, wherein the weft reinforcing elements (50) are such that the number of 1 to 2 mm threadlike elements protruding from the diameter of the weft reinforcing element is greater than or equal to 6000 threadlike elements per 100 metres of weft reinforcing elements, and more preferentially greater than or equal to 7000 threadlike elements per 100 metres of weft reinforcing elements.

5. Fabric (T) according to any one of the preceding claims, wherein the warp reinforcing elements (44) are substantially parallel to one another and extend in a general warp direction (Dwp) and the weft reinforcing elements (50) are substantially parallel to one another and extend in a general direction referred to as weft direction (Dwt) different from the general warp direction (Dwp) with preferably the general weft direction (Dwt) and the general warp direction (Dwp) forming an angle greater than or equal to 45°, and more preferably the angle ranges from 80° to 110°.

6. Fabric (T) according to one of Claims 1 to 5, wherein each textile warp reinforcing element (44) comprises several multifilament strands.

7. Fabric (T) according to the preceding claim, wherein each warp reinforcing element (44) comprises an assembly consisting of two multifilament strands, the two strands being wound in a helix around one another and, preferably, the reinforcing element being twist-balanced.

8. Fabric (T) according to any one of the preceding claims, wherein each weft reinforcing element (50) comprises, for at least 50% of its weight, one or more textile filaments and/or several textile fibres and preferably consists of one or more textile filaments and/or several textile fibres.

9. Fabric (T) according to any one of the preceding claims, wherein each weft reinforcing element (50) comprises at least one strand comprising a core and a layer coating the core, the core comprising at least one filament and the layer comprising several protruding short fibres.

10. Fabric (T) according to the preceding claim, wherein the core comprises several synthetic organic polymeric filaments and the layer comprises several synthetic organic polymeric fibres.

11. Fabric (T) according to the preceding claim, wherein each filament and/or each fibre are selected from polyester filaments and fibres, polyamide filaments and fibres, polyketone filaments and fibres, polyurethane filaments and fibres, acrylic filaments and fibres, polyolefin filaments and fibres, polyether ether ketone filaments and fibres and the assemblies of these filaments and of these fibres, preferably from polyester filaments and fibres, polyamide filaments and fibres and the assemblies of these filaments and of these fibres and more preferentially the synthetic organic filaments and fibres are polyester filaments and fibres.

12. Fabric (T) according to any one of the preceding claims, wherein the diameter of each weft reinforcing element (50) is strictly less than 0.50 mm, and preferably less than or equal to 0.23 mm.

13. Fabric (T) according to any one of the preceding claims, wherein the density of the weft reinforcing elements (50) ranges from 3.0 to 8.0 weft reinforcing elements per dm of fabric (T), preferably from 3.0 to 6.0 weft reinforcing elements per dm of fabric (T) and more preferentially from 3.0 to 5.5 weft reinforcing elements per dm of fabric (T).

14. Elastomer composite (C) for tyres (10) comprising at least one fabric (T) according to any one of the preceding claims embedded in an elastomer composition.

15. Tyre (10) comprising a hoop reinforcement (17) comprising at least one hooping ply (19) **characterized in that** the hooping ply (19) comprises an elastomer composite (C) according to Claim 14.

16. Process for manufacturing a weft fabric (T) wherein:
- in an unwinding step (100), several warp reinforcing elements (44) are unwound from a creel (100) on an air-jet loom;
- in a separation step (110), the warp reinforcing elements (44) are separated into a first and a second ply of warp reinforcing elements;
- in an interweaving step (120), at least one weft reinforcing element (50) is alternately interwoven with warp reinforcing elements (44) of the first ply of warp reinforcing elements then of the second ply of warp reinforcing elements;
- in a winding step (130), the weft fabric (T) is wound on a storage reel;
wherein, the moisture regain MR of the weft reinforcing elements (50) is less than or equal to 2.0%; the moisture regain being determined according to standard ASTM D 885/D 885MA of January 2010 and;
wherein the weft reinforcing elements (50) are hairy and wherein the weft reinforcing elements (50) are such that the number of threadlike elements protruding from the diameter of the weft reinforcing element (50) is greater than or equal to 1250 threadlike elements per 100 metres of weft reinforcing elements, the number of protruding threadlike elements being determined according to a first method of measuring the hairiness in which any threadlike element crossing a line perpendicular to the tangent to the external diameter of the reinforcing element in the direction of the length of the weft reinforcing element is counted.

17. Process for manufacturing a weft fabric (T) wherein:
- in an unwinding step (100), several warp reinforcing elements (44) are unwound from a creel (100) on an air-jet loom;
- in a separation step (110), the warp reinforcing elements (44) are separated into a first and a second ply of warp reinforcing elements;
- in an interweaving step (120), at least one weft reinforcing element (50) is alternately interwoven with warp reinforcing elements (44) of the first ply of warp reinforcing elements then of the second ply of warp reinforcing elements;
- in a winding step (130), the weft fabric (T) is wound on a storage reel;
wherein, the moisture regain MR of the weft reinforcing elements (50) is less than or equal to 2.0%; the moisture regain being determined according to standard ASTM D 885/D 885MA of January 2010 and; wherein the weft reinforcing elements (50) are hairy and wherein the weft reinforcing elements (50) are such that the number of 1 to 2 mm threadlike elements protruding from the diameter of the weft reinforcing element is greater than or equal to 5000 threadlike elements per 100 metres of weft reinforcing elements, the number of protruding threadlike elements being determined according to a second method of measuring the hairiness in which the number of threadlike elements protruding from the diameter of the weft reinforcing element which have a size of between 1 and 2 mm if a line is plotted perpendicular to the tangent to the external diameter of the reinforcing element in the direction of the length of the weft reinforcing element, are measured.
